# EUROPEAN PATENT APPLICATION

(11) **EP 1 890 487 A1**
(43) Date of publication of application: **20.02.2008**
(21) Application number: 07108805.8
(22) Date of filing: 24.05.2007
(51) Int. Cl.: H04N 5/50

(54) **Channel changing method and image display apparatus using the same**

(30) Priority: 16.08.2006 KR 20060077301
(71) Applicant: Samsung Electronics Co., Ltd., Suwon-si, Gyeonggi-Do (KR)
(72) Inventor: Jang, Bong-ki, Gyeonggi-do (KR)
(74) Representative: Grootscholten, Johannes A.M.

(57) **Abstract**

A channel changing method and an image display apparatus using the same. The channel changing method is used in an image display apparatus for displaying an image included in a received transport stream, and includes blocking the received transport stream when a channel changing command is inputted, and removing the block of the received transport stream when a channel change is determined as completed. The method changes a channel controlling the image signal transport stream received for an interval difference that a tuner selects a changed channel, thereby ensuring a mapping of a virtual channel table (VCT) not to go crisscross in the channel change.

## Description

### FIELD OF THE INVENTION

The present invention relates generally to a channel changing method and an image display apparatus using the same. More particularly, the present invention relates to a channel changing method, which changes a channel according to a state of a tuner of an image receiving apparatus in a channel change, and an image display apparatus using the channel changing method.

### BACKGROUND OF THE INVENTION

An image display apparatus is an apparatus which displays images received by radio through an antenna from the outside. As examples of a typical image display apparatus, there are a mobile phone, a personal digital assistant (PDA), a television (TV), etc.

Such an image display apparatus receives image signals by radio from a set-top box, which is an example of an image receiving apparatus, and displays them. To be more specific, when the set-top box transmits digital-shaped image signals received through a tuner from an antenna by radio, the image display apparatus displays images corresponding to the image signals received by radio from the set-top box.

However, at this time, if channel changing commands are continuously inputted into the image display apparatus by user, a problem occurs, in that since the image display apparatus has a channel changing interval different from that of the set-top box, the image display apparatus and the set-top box are out of sync and thus a mapping of a physical transmission channel (PTC) and a virtual channel (VC) goes crisscross.

To be more specific, if a channel changing command is inputted into the image display apparatus, the image display apparatus transmits the inputted channel changing command to the set-top box. The tuner of the set-top box selects a PTC corresponding to a channel according to the channel changing command transmitted from the image display apparatus, and transmits image signals to the image display apparatus. For instance, if a user changes an eleventh VC into a seventh VC, the image display apparatus transmits a command to the set-top box to change the eleventh VC into the seventh VC. Then, the tuner of the set-top box stops selecting a PTC, for example, an eighty first PTC, corresponding to the eleventh VC, and then selects a PTC, for example, an eighty second PTC, corresponding to the seventh VC. At this time, in the image display apparatus and the set-top box, a virtual channel table (VCT) is stored as a mapping table of the PTC and the VC compiling that the eighty first PTC corresponds to the eleventh VC and the eighty second PTC corresponds to the seventh VC. Accordingly, the set-top box selects the PTC corresponding to the VC according to the channel changing command on the basis of the VCT.

However, an interval difference exists between a point of time when the channel changing command is transmitted to the set-top box and a point of time when the set-top box selects the eighty second PTC corresponding to the changed seventh VC to transmit the received image signal to the image display apparatus. Due to this, the image display apparatus may receive image signals received onto the eighty first PTC corresponding to the eleventh VC while preparing to display image signals received onto the eighty second PTC corresponding to the changed seventh VC. As a result, sync does not come true. That is, while the image display apparatus determines that after the channel change, the eighty second PTC corresponding to the changed seventh VC is selected, the tuner of the set-top box still selects the eighty first PTC corresponding to the eleventh VC, so that the image display apparatus and the set-top box are out of sync.

Thus, the image display apparatus determines that the PTC corresponding to the eleventh VC is two, that is, the eighty first PTC and the eighty second PTC, and generates an error to renew the VCT. As a result, a mapping of the VCT goes crisscross.

### SUMMARY OF THE INVENTION

An aspect of the present invention is to solve at least the above problems and/or disadvantages and to provide at least the advantages described below. Accordingly, an aspect of the present invention is to provide a channel changing method capable of changing a channel, so that a mapping of a physical transmission channel (PTC) and a virtual channel (VC) does not go crisscross in a channel change, and an image display apparatus using the same.

Another aspect of the present invention is to provide a channel changing method, which changes a channel controlling an image signal transport stream (TS) received for an interval difference that a tuner selects a changed channel, in a channel change, and an image display apparatus using the same.

According to an aspect of an exemplary embodiment of the present invention, there is provided a channel changing method of an image display apparatus for displaying an image included in a received transport stream, including: blocking the received transport stream when a channel changing command is inputted, and removing the block of the received transport stream when a channel change is determined as completed.

The transport stream may be received from an image receiving apparatus having a tuner.

The method may further include transmitting a channel changing command message to the image receiving apparatus when the channel changing command is inputted.

The removing the block of the received transport stream may be carried out by removing the block of the received transport stream when a channel change-completion message of the tuner is received from the image receiving apparatus.

Also, the method may further include decoding the received transport stream and the blocking the received transport stream may be carried out by blocking the received transport stream from being decoded.

Here, the image receiving apparatus may be a set-top box, and the image display apparatus may be connected by radio with the image receiving apparatus.

Also, the channel changing command message may be a message requesting the tuner to select a changed channel, and the channel change-completion message may be a message acknowledging that the tuner has completed selecting a changed channel.

According to another aspect of an exemplary embodiment of the present invention, there is provided an image display apparatus for displaying an image included in an received transport stream including: a decoder to decode the received transport stream, and a controller to block the received transport stream from being outputted to the decoder when a channel changing command is inputted, and to remove the block of the received transport stream thus to allow the received transport stream to be outputted to the decoder when a channel change is determined as completed.

The transport stream may be received from an image receiving apparatus having a tuner.

The controller may transmit a channel changing command message to the image receiving apparatus when the channel changing command is inputted.

Also, the controller may remove the block of the received transport stream when a channel change-completion message of the tuner is received from the image receiving apparatus.

The apparatus may further include a transmitting and deceiving unit to receive the received transport stream, and the controller may control the transmitting and deceiving unit so as not to output the received transport stream to the decoder.

The apparatus may further include a blocking unit having a switch capable of blocking the received transport stream, and the controller may control the blocking unit so as not to output the received transport stream to the decoder.

Also, the apparatus may further include a display unit to display the image included in received transport stream.

Here, the image receiving apparatus may be a set-top box, and the image display apparatus may be connected by radio with the image receiving apparatus.

Also, the channel changing command message may be a message requesting the tuner to select a changed channel, and the channel change-completion message may be a message acknowledging that the tuner has completed selecting a changed channel.

### BRIEF DESCRIPTION OF THE DRAWING FIGURES

The above aspect and other features of the present invention will become more apparent by describing in detail exemplary embodiments thereof with reference to the attached drawing figures, wherein;
FIG. 1 is a block diagram exemplifying a radio transmitting and receiving system including an image display apparatus in accordance with an exemplary embodiment of the present invention;
FIG. 2 is a block diagram exemplifying an image display apparatus in accordance with another exemplary embodiment of the present invention;
FIG. 3 is a view exemplifying a channel changing method of an image display apparatus in accordance with an exemplary embodiment of the present invention;
FIG. 4 is a flowchart exemplifying the channel changing method of the image display apparatus in accordance with the exemplary embodiment of the present invention; and
FIG. 5 is a flowchart exemplifying a channel changing method of the image receiving apparatus in accordance with the exemplary embodiment of the present invention.

Throughout the drawings, the same drawing reference numerals will be understood to refer to the same elements, features, and structures.

### DETAILED DESCRIPTION OF THE EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

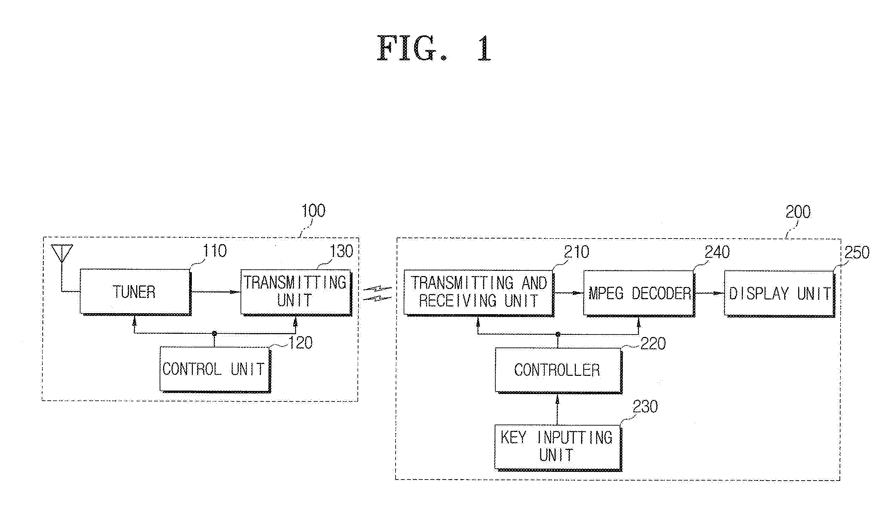

FIG. 1 is a block diagram exemplifying a radio transmitting and receiving system including an image display apparatus in accordance with an exemplary embodiment of the present invention.

The image display apparatus 200 of the exemplary embodiment of the present invention changes a channel by controlling a received image signal transport stream (TS) for an interval difference that a tuner 110 of a set-top box 100 selects a changed channel, so that a mapping of a physical transmission channel (PTC) and a virtual channel (VC) does not go crisscross in a channel change.

Referring to FIG. 1, the radio transmitting and receiving system includes a set-top box 100 as an example of an image receiving apparatus, and a television (TV) 200 as an example of the image display apparatus.

The set-top box 100 and the TV 200 transmit data by radio. That is, the set-top box 100 transmits an image signal TS received through an antenna by radio to the TV 200, and the TV 200 transmits a channel changing command by radio to the set-top box 100.

The set-top box 100 receives image signals through the antenna, and transmits the received image signals to the TV 200. The set-top box 100 includes a tuner 110, a control unit 120, and a transmitting unit 130. To be more specific, the tuner 110 selects a PTC corresponding to a VC, and thus receives image signals (referred as TS below) of TS structure compressed in a MPEG-2 through the antenna.

The control unit 120 controls the transmitting unit 130 to transmit the TS received by the tuner 110 to the TV 200, and controls the tuner 110 to select a PTC, which corresponds to a channel according to the channel changing command transmitted from the TV 200 through the transmitting unit 130.

Also, when the tuner 110 selects the PTC corresponding to the channel according to the channel changing command, the control unit 120 controls the transmitting unit 130 to transmit a channel change-completion message to the TV 200.

The transmitting unit 130 provides a radio interface for corresponding by radio with the TV 200. The transmitting unit 130 transmits the TS received by the tuner 110 and the channel change-completion message to the TV 200 and receives the channel changing command transmitted from the TV 200, under a control of the control unit 120.

The TV 200 displays images corresponding to the image signals included in the TS received from the set-top box 100, and changes a channel by controlling the received TS in the channel change. The TV 200 includes a transmitting and receiving unit 210, a controller 220, a key inputting unit 230, a moving picture experts group (MPEG) decoder 240 and a display unit 250.

To be more specific, the transmitting and receiving unit 210 provides a radio interface for corresponding by radio with the set-top box 100. The transmitting and receiving unit 210 receives the TS and the channel change-completion message from the set-top box 100 and transmits the channel changing command to the set-top box 100, under control of the controller 220 to be described in detail later.

If the channel changing command is inputted by a user through keys for channel change provided in the key inputting unit 230, the controller 220 controls the transmitting and receiving unit 210 to transmit the channel changing command to the set-top box 100.

Also, while the tuner 110 of the set-top box 100 selects a changed channel, the controller 220 controls the transmitting and receiving unit 210 to disable, that is, not to output the TS received by the transmitting and receiving unit 210, and thus blocks the TS from being inputted to the MPEG decoder 240 to be described in detail later.

When the controller 220 receives the channel change-completion message through the transmitting and receiving unit 210 from the set-top box 100, it controls the transmitting and receiving unit 210 to enable, that is, to output the TS received by the transmitting and receiving unit 210.

The MPEG decoder 240 decompresses a compression of the image signals included the TS received by the transmitting and receiving unit 210. Images, which correspond to the image signals decompressed by the MPEG decoder 240, are displayed on the display unit 250.

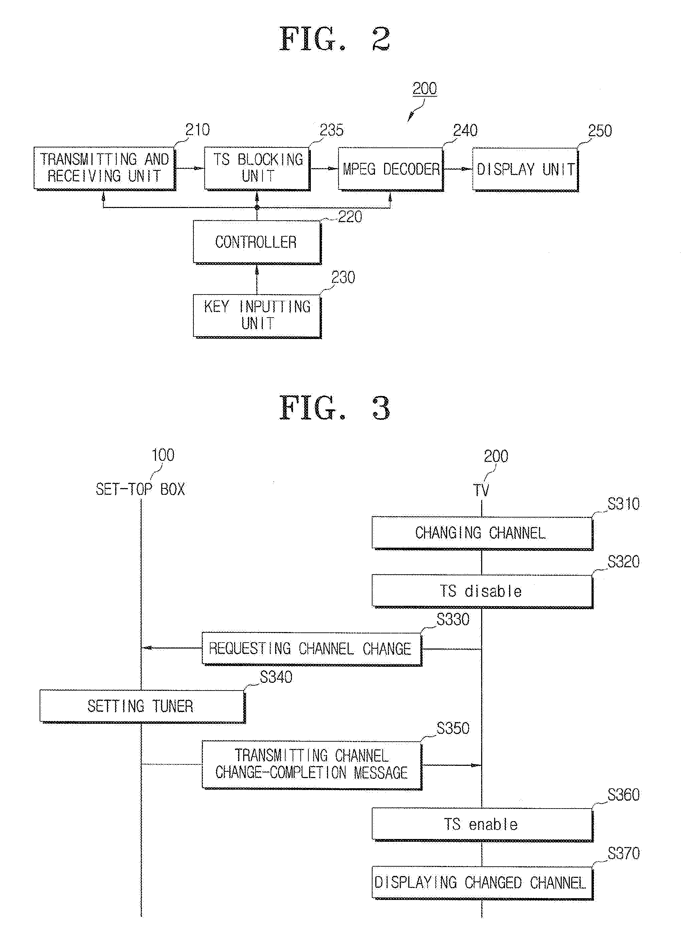

FIG. 2 is a block diagram exemplifying an image display apparatus in accordance with another exemplary embodiment of the present invention.

Referring to FIG. 2, a TV 200, which is an example of the image display apparatus of the another exemplary embodiment of the present invention, includes a transmitting and receiving unit 210, a controller 220, a key inputting unit 230, a TS blocking unit 235, a MPEG decoder 240 and a display unit 250.

Since the transmitting and receiving unit 210, the key inputting unit 230, the MPEG decoder 240 and the display unit 250 are the same as those of the TV explained with reference to FIG. 1, detailed description thereof will be omitted for clarity and conciseness.

The TS blocking unit 235, as a switch, is turned off to block a TS outputted by the transmitting and receiving unit 210 from being inputted into the MPEG decoder 240 under a control of the controller 220 if a channel changing command is inputted through the key inputting unit 230. At this time, the controller 220 controls the transmitting and receiving unit 210 to output a TS received by the transmitting and receiving unit 210.

On the other hand, if there is in a general mode that a channel change is not carried out, the TS blocking unit 235, as a switch, is turned on to pass the TS outputted by the transmitting and receiving unit 210 under a control of the controller 220.

FIG. 3 is a view exemplifying a channel changing method of the image display apparatus in accordance with an exemplary embodiment of the present invention.

Referring to FIG. 3, the controller 220 of the TV 200 changes a channel if a channel changing command is inputted through the key inputting unit 230 (S310). At this time, the controller 220 displays a text corresponding to a channel number, which is selected by a user to change, and thus indicates a channel change.

And the controller 220 controls the transmitting and receiving unit 210 so as not to output a TS received from the set-top box 100 (S320), or controls the TS blocking unit 235 so as not to output the received TS. This is intended to prevent a discordance of sync caused by an interval difference generating while the set-top box 100 selects a PTC corresponding to a changed VC and transmits received image signals to the TV 200.

The controller 220 controls the transmitting and receiving unit 210 to transmit a channel changing command message corresponding to the channel changing command inputted through the key inputting unit 230 to the set-top box 100, and thus requests a channel change to the set-top box 100 (S330).

When the channel changing command message is transmitted from the TV 200, the control unit 120 of the set-top box 100 sets the tuner 110 to select a PTC corresponding to a VC requested to change (S340). After the setting of the tuner 110 is completed, when the tuner 110 selects the PTC corresponding to the requested VC, the control unit 120 controls the transmitting unit 130 to transmit a channel change-completion message acknowledging to the TV 200 that a channel change of the tuner 110 is completed (S350).

When the channel change-completion message is transmitted from the set-top box 100, the controller 220 of the TV 200 determines that the channel change of the tuner 110 is completed, and controls the transmitting and receiving unit 210 to output the TS received from the set-top box 100 (S360), or controls the TS blocking unit 235 to pass the received TS.

Next, the controller 220 controls the MPEG decoder 240 to display images received onto the changed channel selected by the set-top box 100 on the display unit 250 (S370).

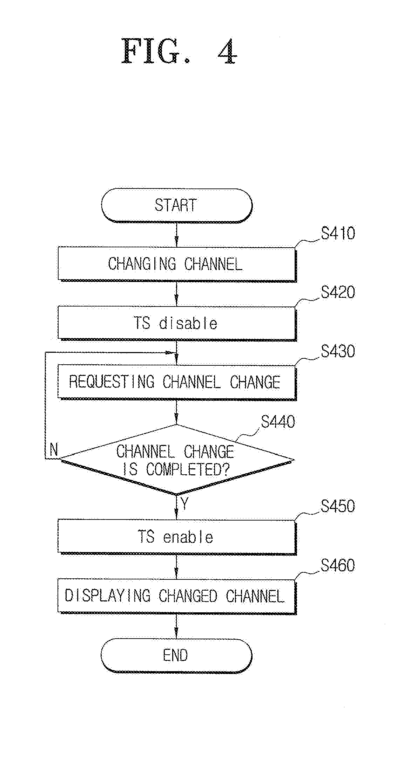

FIG. 4 is a flowchart exemplifying the channel changing method of the image display apparatus in accordance with the exemplary embodiment of the present invention.

Referring to FIG. 4, if a channel changing command is inputted through the key inputting unit 230, the controller 220 of the TV 200 changes a channel (S410), as explained with reference to FIG. 3.

And the controller 220 controls the transmitting and receiving unit 210 or the TS blocking unit 235 to block a TS received from the set-top box 100 from being inputted into the MPEG decoder 240 (S420).

The controller 220 controls the transmitting and receiving unit 210 to transmit a channel changing command message corresponding to the channel changing command inputted through the key inputting unit 230 to the set-top box 100, and thus request a channel change to the set-top box 100 (S430). Alternatively, the operation of requesting the channel change at the step S430 can be carried out prior to the operation of blocking the TS at the step S420.

The controller 220 determines whether the channel change of the tuner 110 is completed (S440). At this time, the controller 220 determines that the channel change of the tuner 110 is completed when a channel change-completion message acknowledging that the channel change of the tuner 110 is completed is received from the set-top box 100.

If the controller 220 determines that the channel change of the tuner 110 is completed (S440-Y), it controls the transmitting and receiving unit 210 or the TS blocking unit 235 to output the TS received from the set-top box 100 (S450).

Next, the controller 220 controls the MPEG decoder 240 to display images received onto the changed channel selected by the set-top box 100 on the display unit 250 (S460).

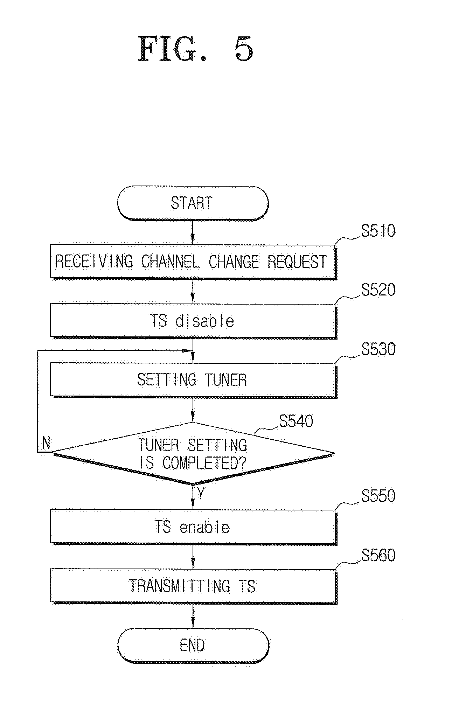

FIG. 5 is a flowchart exemplifying a channel changing method of the image receiving apparatus in accordance with the exemplary embodiment of the present invention.

Referring to FIG. 5, the channel changing method explained with reference to FIG. 4 is applicable to the set-top box 100, which is an example of the image receiving apparatus in accordance with the exemplary embodiment of the present invention, with the same principle.

The control unit 120 of the set-top box 100 receives a channel changing request through the transmitting unit 130 from the TV 200 (S510).

And the control unit 120 controls the transmitting unit 130, so that a TS received through the tuner 110 is not transmitted to the TV 200 through the transmitting unit 130 (S520). Alternatively, the control unit 120 can control a TS blocking unit 235 so as not to output the TS. In this case, the TS blocking unit 235 of the set-top box 100 is disposed between the tuner 110 and the transmitting unit 130, like as that of the TV 200 explained with reference to FIG. 2.

The control unit 120 sets the tuner 110 to select a PTC corresponding to a VC requested to change (S530). And then, the control unit 120 determines whether the setting of the tuner 110 is completed (S540).

If the control unit 120 determines that the setting of the tuner 110 is completed (S540-Y), it controls the transmitting unit 130, so that the tuner 110 transmits the TS received onto the selected PTC to the TV 200 (S550). Alternatively, after the setting of the tuner 110 is completed, the control unit 120 can determine whether another channel changing request is again received. In this case, if the control unit 120 determines that other channel changing requests are not received any longer, it controls the transmitting unit 130, so that the tuner 110 transmits the TS received onto the selected PTC to the TV 200.

The transmitting unit 130 transmits the TS received onto the PTC, which is selected by the tuner 110, to the TV 200 under a control of the control unit 120 (S560).

As apparent from the foregoing description, according to the exemplary embodiments of the present invention, the channel changing method and the image display apparatus using the same change the channel controlling the image signal TS received for the interval difference that the tuner selects the changed channel in the channel change. Accordingly, the channel changing method and the image display apparatus using the same according to the exemplary embodiments of the present invention can change the channel without mapping the VCT wrong.

Although representative embodiments of the present invention have been shown and described in order to exemplify the principle of the present invention, the present invention is not limited to the specific embodiment. It will be understood that various modifications and changes can be made by one skilled in the art without departing from the spirit and scope of the invention as defined by the appended claims. Therefore, it shall be considered that such modifications, changes and equivalents thereof are all included within the scope of the present invention.

## Claims

1. A channel changing method of an image display apparatus for displaying an image included in a received transport stream, the method comprising:
blocking the received transport stream when a channel changing command is inputted; and
removing the block of the received transport stream when it is determined that a channel change is completed.

2. The method of claim 1, wherein the transport stream is received from an image receiving apparatus having a tuner.

3. The method of claim 2, further comprising:
transmitting a channel changing command message to the image receiving apparatus when the channel changing command is inputted.

4. The method of claim 2, wherein the removing the block of the received transport stream comprises removing the block of the received transport stream when a channel change-completion message is received by the image display apparatus from the image receiving apparatus.

5. The method of claim 1, further comprising:
decoding the received transport stream,
wherein the blocking the received transport stream comprises blocking the received transport stream from being decoded.

6. The method of claim 2, wherein the image receiving apparatus comprises a set-top box, and the image display apparatus is connected by radio to the image receiving apparatus.

7. The method of claim 3, wherein the channel changing command message is a message requesting the tuner to select a changed channel.

8. The method of claim 4, wherein the channel change-completion message is a message acknowledging that the tuner has completed selecting a changed channel.

9. An image display apparatus for displaying an image included in a received transport stream comprising:
a decoder which decodes the received transport stream; and
a controller which blocks the received transport stream from being outputted to the decoder when a channel changing command is inputted, and which removes the block of the received transport stream to allow the received transport stream to be outputted to the decoder when it is determined that a channel change is completed.

10. The apparatus of claim 9, wherein the transport stream is received from an image receiving apparatus having a tuner.

11. The apparatus of claim 10, wherein the controller transmits a channel changing command message to the image receiving apparatus when the channel changing command is inputted.

12. The apparatus of claim 10, wherein the controller removes the block of the received transport stream when a channel change-completion message is received by the image display device from the image receiving apparatus.

13. The apparatus of claim 9, further comprising:
a transmitting and receiving unit which receives the received transport stream,
wherein the controller blocks the received transport stream by controlling the transmitting and receiving unit so as not to output the received transport stream to the decoder.

14. The apparatus of claim 9, further comprising:
a blocking unit having a switch capable of blocking the received transport stream,
wherein the controller blocks the received transport stream by controlling the blocking unit so as not to output the received transport stream to the decoder.

15. The apparatus of claim 9, further comprising:
a display unit which displays the image included in the received transport stream.

16. The apparatus of claim 10, wherein the image receiving apparatus comprises a set-top box, and the image display apparatus corresponds by radio with the image receiving apparatus.

17. The apparatus of claim 11, wherein the channel changing command message is a message requesting the tuner to select a changed channel.

18. The apparatus of claim 12, wherein the channel change-completion message is a message acknowledging that the tuner has completed selecting a changed channel.
